# EUROPEAN PATENT SPECIFICATION

(11) **EP 3 245 399 B1**
(45) Date of publication and mention of the grant of the patent: **06.05.2020**
(21) Application number: 16714024.3
(22) Date of filing: 07.01.2016
(51) Int. Cl.: F03D 5/02, F03D 5/06

(54) **GROUND STATION OF A TROPOSPHERIC WIND GENERATOR**
BODENSTATION EINES TROPOSPHÄRISCHEN WINDGENERATORS
STATION AU SOL D'UNE ÉOLIENNE TROPOSPHÉRIQUE

(30) Priority: 12.01.2015 IT TO20150018
(43) Date of publication of application: 22.11.2017
(73) Proprietor: Kite Gen Research S.R.L., 10099 San Mauro Torinese (TO) (IT)
(72) Inventor: IPPOLITO, Massimo, 10072 CASELLE TORINESE (TO) (IT)
(74) Representative: Garavelli, Paolo
(86) International application number: PCT/IT2016/000003
(87) International publication number: WO 2016/113765

(56) References cited:
- WO-A2-2013/005182
- DE-A1-102008 053 818
- US-A1- 2010 232 988

## Description

The present invention refers to a ground station connecting kites belonging to a tropospheric wind generator.

The ground station of a tropospheric wind generator comprises at least one pulley adapted to transmit working power of a shaft to produce energy, a flexible tether adapted to connect at least one inflatable sail to transfer the carrier force of the kite of the inflatable sail to the pulley generating working power, means for controlling and actuating the flight trajectory of the inflatable sail and means for re-winding the flexible tether on the pulley. The inflatable sail is connected to the ground station through control tethers and supporting tethers. Such control tethers can change length to control incidence angle, flight direction and flight speed of the kite. The length variation of such control tethers is managed by the ground station through a system of moving pulleys. Both the control tethers and the supporting tethers are wound on a power shaft through a system of pulleys connected to a generator of electric energy. The inflatable sail is pusher at a very high speed by the wind gene rating a rotation of such pulleys. Once having ended to unwind the tethers, the inclination angle of the kite of the inflatable sail is modified in order to be able to start rewinding the tethers by using a minimum force. Once the tethers have been rewound at the right distance, the kite is again inclined for the high-speed operation adapted to generate axial power. A net power is generated through the force resulting from the difference of the unwinding force with respect to the winding force of the tethers. The control group comprises a plurality of moving supports adapted to separately interact with such supporting and control tethers to support the inflatable sail and regulate the inclination angle of the two ends, through a controller electrically actuated by the ground station.

According to Patent Application ITTO20080423, a tropospheric wind generator is composed of a rotatable basement, a lever capable of being oriented, a jet-type venting plant, a supporting system of a wing with variable geometry and a system for driving the tethers. The flexible and resistant lever capable of being oriented assumes an inflexed position determined by the tension operating on the tethers depending on the aerodynamic actions operating on the wind, in order to reduce the amount of an overturning moment.

The lever capable of being oriented can be composed of trunks connected by gimbals, while the inflexion is controlled in a programmed way through servo-mechanisms. The basement can rotate around a vertical axis. The supporting system is composed of a pair of small arms with compass-type opening.

The lever capable of being oriented comprises means adapted to orient each tether along the movement direction of the kites. Patent Application ITTO20130752 discloses such means comprising idle pulleys capable of being oriented through a servo-mechanism.

Another example of a prior art device is shown in WO 2013/005182 A2.

Object of the present invention is solving the prior art problems by providing a ground station connecting the kites belonging to a tropospheric wind generator having improved performance characteristics with respect to what is proposed by the known art.

The above and other objects and advantages of the invention, as will appear from the following description, are obtained with a station as claimed in claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments, provided as a nonlimiting example, with reference to the enclosed drawings, in which:

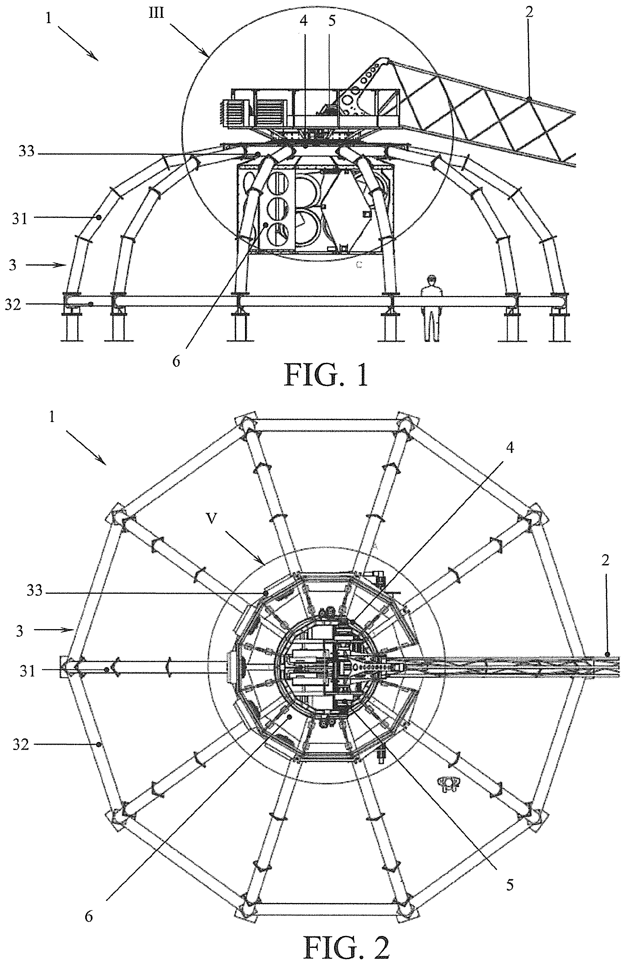

- Figure 1 shows a side view of a preferred embodiment of a ground station of a tropospheric wind generator according to the present invention;
- Figure 2 shows a plan view of the station of Figure 1;

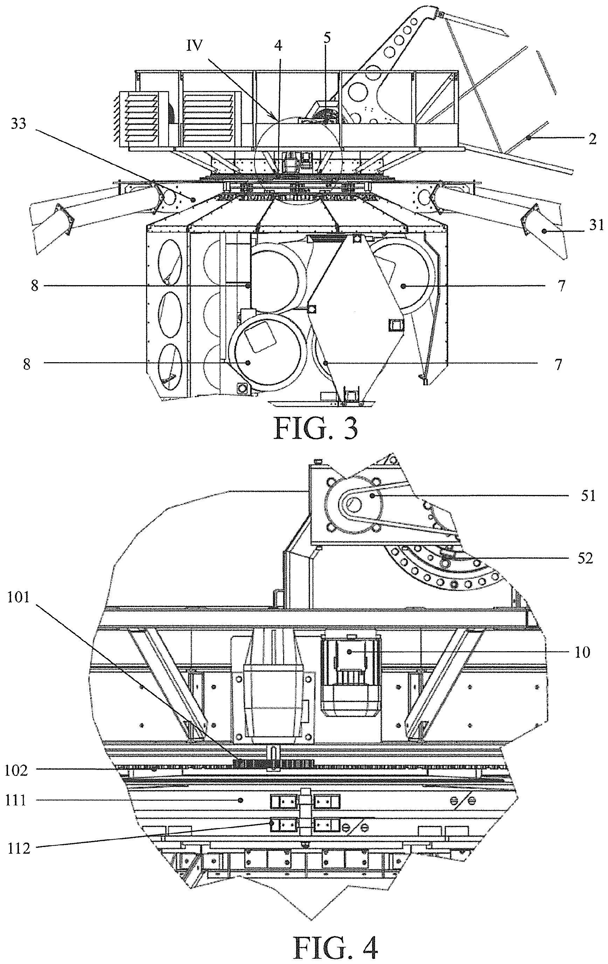

- Figure 3 shows an enlarged view of the contents of circle III of Figure 1;
- Figure 4 shows an enlarged view of the contents of circle IV of Figure 3; and

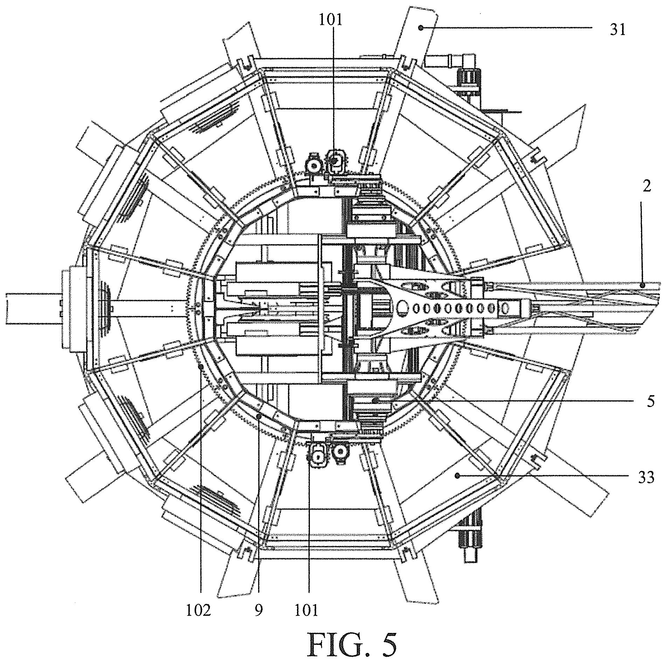

- Figure 5 shows an enlarged view of the contents of circle V of Figure 2.

With reference to the Figures it is possible to note that a ground station 1 of a tropospheric wind generator is of the type adapted to deviate tethers connecting at least one kite through at least one lever 2 capable of being oriented.

The ground station 1 comprises a carrier structure 3 surmounted by a first motored joint 4 and a second motored joint 5.

The first motored joint 4 allows a free swinging rotation of the lever 2 capable of being oriented.

The second motored joint 5 allows a free lifting rotation of the lever 2 capable of being oriented.

Preferably, the second motored joint 5 is placed on board the first motored joint 4.

Moreover, the ground station 1 comprises a machine room 6 occupied by at least one pair of drums 7, pulleys and alternators 8.

In particular, the carrier structure 3 comprises a reticular shell composed of radial curved rods 31 having the ends connected by one or more horizontal rings 32, 33 to allow deformations adapted to absorb and dampen force peaks transmitted by at least one of such kites.

The machine room 6 is integral with the first motored joint 4 to be able to rotate with respect to the carrier structure 3.

The machine room 6 comprises at least one pair of drums 7, pulleys and alternators 8, electric panels and actuators (not shown).

Preferably, the radial curved rods 31 are angularly at the same distance and connected to at least one pair of horizontal rings 32, 33 respectively placed at the lower end at the level of the bearing ground and at the upper end at the level of the first motored joint 4. Still more preferably, at the height of an upper ring 33 belonging to such pair of horizontal rings 32, 33 at least one sliding bearing 9 is housed, in order to allow the rotation of the first motored joint 4.

Preferably, at least one motor-reducer (10) fastened to the carrier structure 3 is connected to a gear composed of a pinion 101 and a toothed wheel 102 integral with the first motored joint 4.

An external cover (not shown) fastened to the carrier structure 3 allows creating a sheltered environment in the space surrounding the machine room 6.

The carrier structure 3 behaves like a spring adapted to dampen force peaks created by the kite subjected to wind bursts.

The carrier structure 3 subjected to the traction forces of the tethers is sized to support stresses of the order of 1,000 KN.

The electric panels placed in the machine room 6 are equipped with servo-controls.

In the lower part of the machine room 6 the drums 7 are placed, adapted to allow winding the tethers connecting the kites.

The drums 7 axially slide to avoid accumulations of tethers. The rotation and translation motions of the mutually dependent drums 7 are actuated through the alternators 8.

Electric components are distributed in the whole structure of the ground station 1.

Chains (not shown) are placed on the moving parts and are adapted to carry wirings and pipes of the cooling plant. Electric panels fastened to the machine room 6 contain servo-controls to perform lifting and swinging of the inclined rod 2 and to actuate pulleys and alternators 8 associated with the drums 7.

A battery of super-capacitors (not shown) are placed on the fixed parts and have the function of reducing the oscillation of the power delivered to the mains when producing and of accumulating the electric energy which is used during the recovery phase of the inflatable sail.

An electric connection between the fixed and moving parts occurs by means of sliding contacts 111, 112 placed at the height of the upper ring 33 of the carrier structure 3.

## Claims

1. Ground station (1) of a tropospheric wind generator, of the type adapted to deviate tethers connecting at least one kite through at least one lever (2) capable of being oriented, comprising a carrier structure (3) surmounted by a first motored joint (4) adapted to allow a free swinging rotation of the lever (2) capable of being oriented and a second motored joint (5) adapted to allow a free lifting rotation of the lever (2) capable of being oriented and a machine room (6), **characterized in that** said carrier structure (3) comprises a reticular shell composed of radial curved rods (31) having the ends connected by two or more horizontal rings (32, 33) to allow deformations adapted to absorb and dampen force peaks transmitted by said at least one kite, said radial curved rods (31) being angularly at the same distance and connected to at least one pair of said horizontal rings (32, 33) respectively placed at the lower end at the level of the bearing ground and at the upper end at the level of said first motored joint (4).

2. Ground station (1) of a tropospheric wind generator according to the previous claim, **characterized in that** said machine room (6) is integral with said first motored joint (4) to be able to rotate with respect to said carrier structure (3).

3. Ground station (1) of a tropospheric wind generator according to claim 1, **characterized in that** said second motored joint (5) is placed on board of said first motored joint (4).

4. Ground station (1) of a tropospheric wind generator according to the previous claim, **characterized in that** at the height of an upper ring (33) belonging to at least one pair of said horizontal rings (32, 33) at least one sliding bearing (9) is housed, to allow a rotation of said first motored joint (4).

5. Ground station (1) of a tropospheric wind generator according to the previous claim, **characterized in that** at least one motor-reducer (10) fastened to said carrier structure (3) is connected to a gear composed of a pinion (101) and a toothed wheel (102) integral with said first motored joint (4).

6. Ground station (1) of a tropospheric wind generator according to claim 1, **characterized in that** an electric connection between fixed and moving parts of said station (1) occurs by means of sliding contacts (111, 112) placed at the height of an upper ring (33) belonging to at least one of said pair of horizontal rings (32, 33).

## Patentansprüche

1. Bodenstation (1) eines Troposphären-Windgenerators, der dazu dient, Seile umzulenken, die mindestens ein Flügelprofil mit mindestens einem orientierbaren Hebel (2) verbinden, die eine Trägerstruktur (3) enthält, welche durch eine erste Antriebskupplung (4) überragt wird, die dazu dient, eine freie Schwenkdrehung des orientierbaren Hebels (2) zu ermöglichen, und eine zweite Antriebskupplung (5), die dazu dient, eine freie Hubdrehung des orientierbaren Hebels (2) zu ermöglichen, und einen Maschinenraum (6), der **dadurch gekennzeichnet ist, dass** die genannte Trägerstruktur (3) eine Netzschale enthält, die aus gebogenen Radialstangen (31) besteht, deren Enden mit einem oder mehreren horizontalen Ringen (32, 33) verbunden sind, um Verformungen zu ermöglichen, die dazu dienen, Kraftspitzen zu absorbieren und zu dämpfen, welche durch mindestens ein Flügelprofil übertragen werden, die genannten gebogenen Radialstangen (31) haben den gleichen Winkelabstand und sind mit mindestens einem Paar der genannten horizontalen Ringe (32, 33) verbunden, die jeweils am unteren Ende in Bodenhöhe und am oberen Ende in Höhe der genannten ersten Antriebskupplung (4) angebracht sind.

2. Bodenstation (1) eines Troposphären-Windgenerators gemäß dem vorhergehenden Patentanspruch, die **dadurch gekennzeichnet ist, dass** der genannte Maschinenraum (6) einteilig mit der genannten ersten Antriebskupplung (4) ist, um sich gegenüber der genannten Trägerstruktur (3) drehen zu können.

3. Bodenstation (1) eines Troposphären-Windgenerators gemäß Patentanspruch 1, die **dadurch gekennzeichnet ist, dass** die genannte zweite Antriebskupplung (5) auf der genannten ersten Antriebskupplung (4) angebracht ist.

4. Bodenstation (1) eines Troposphären-Windgenerators gemäß dem vorhergehenden Patentanspruch, die **dadurch gekennzeichnet ist, dass** in Höhe eines oberen Rings (33), der mindestens einem Paar der genannten horizontalen Ringe (32, 33) angehört, mindestens ein Gleitlager (9) sitzt, um eine Drehung der genannten ersten Antriebskupplung (4) zu ermöglichen.

5. Bodenstation (1) eines Troposphären-Windgenerators gemäß dem vorhergehenden Patentanspruch, die **dadurch gekennzeichnet ist, dass** mindestens ein Getriebe (10), das an der genannten Trägerstruktur (3) befestigt ist, mit einem Zahnrad verbunden wird, das aus einem Ritzel (101) und einem Zahnrad (102) besteht, das einteilig mit der genannten ersten Antriebskupplung (4) ist.

6. Bodenstation (1) eines Troposphären-Windgenerators gemäß Patentanspruch 4, die **dadurch gekennzeichnet ist, dass** eine elektrische Verbindung zwischen festen und beweglichen Teilen der genannten Station (1) durch Gleitkontakte (111, 112) erfolgt, die in Höhe eines oberen Rings (33) angebracht sind, der mindestens einem der genannten Paare der horizontalen Ringe (32, 33) angehört.

## Revendications

1. Station au sol (1) d'un générateur éolien troposphérique, du type apte à dévier des câbles reliant au moins une surface portante à travers au moins un levier orientable (2), comprenant une structure de support (3) surmontée par un premier joint motorisé (4) permettant une rotation libre de pivotement du levier orientable (2) et un second joint motorisé (5) permettant une rotation libre de soulèvement du levier orientable (2) ainsi qu'une chambre des machines (6), **caractérisée en ce que** la structure de support (3) comprend une coque réticulée formée par des tiges radiales recourbées (31) dont les extrémités sont reliées à un ou plusieurs anneaux horizontaux (32, 33) pour permettre des déformations aptes à absorber et atténuer des pics de force transmis au moins par une surface portante ; les tiges radiales recourbées (31) sont angulairement équidistantes et reliées au moins à un couple d'anneaux horizontaux (32, 33) placés respectivement à l'extrémité inférieure au niveau du sol d'appui et à l'extrémité supérieure au niveau du premier joint motorisé (4).

2. Station au sol (1) d'un générateur éolien troposphérique, selon la revendication précédente, **caractérisée en ce que** la chambre des machines (6) est solidaire du premier joint motorisé (4) pour pouvoir tourner par rapport à la premier structure de support (3).

3. Station au sol (1) d'un générateur éolien troposphérique, selon la revendication 1, **caractérisée en ce que** le second joint motorisé (5) est monté sur le premier joint motorisé (4).

4. Station au sol (1) d'un générateur éolien troposphérique, selon la revendication précédente, **caractérisée en ce que** la hauteur d'un anneau supérieur (33) appartenant au moins à un couple d'anneaux horizontaux (32, 33) accueille au moins un palier de roulement (9) pour permettre la rotation du premier joint motorisé (4).

5. Station au sol (1) d'un générateur éolien troposphérique, selon la revendication précédente, **caractérisée en ce qu'**au moins un motoréducteur (10) fixé à la structure de support (3) est relié à un engrenage formé par un pignon (101) et une roue dentée (102) solidaire du premier joint motorisé (4).

6. Station au sol (1) d'un générateur éolien troposphérique, selon la revendication 4, **caractérisée en ce que** le branchement électrique entre les parties fixes et mobiles de la station (1) est réalisé à travers des contacts de frottement (111, 112) situés à la hauteur de l'anneau supérieur (33) appartenant au moins à un couple d'anneaux horizontaux (32, 33).
